**Europäisches Patentamt**

**European Patent Office**

**Office européen des brevets**

(11) Veröffentlichungsnummer: **0 131 201**
**A1**

(12) **EUROPÄISCHE PATENTANMELDUNG**

(21) Anmeldenummer: **84107376.0**

(22) Anmeldetag: **27.06.84**

(51) Int. Cl.⁴: **B 01 J 2/00**
**F 28 D 7/00**

(30) Priorität: **05.07.83 DE 3324159**

(43) Veröffentlichungstag der Anmeldung:
**16.01.85 Patentblatt 85/3**

(84) Benannte Vertragsstaaten:
**AT BE CH FR GB IT LI NL SE**

(71) Anmelder: **Walter, Ulrich**
**Asternweg 17**
**D-4020 Mettmann 2(DE)**

(72) Erfinder: **Walter, Ulrich**
**Asternweg 17**
**D-4020 Mettmann 2(DE)**

(74) Vertreter: **Patentanwaltsbüro Cohausz & Florack**
**Postfach 14 01 47**
**D-4000 Düsseldorf 1(DE)**

(54) **Verfahren und Vorrichtung zum Pelletieren.**

(57) Beim Pelletieren und anschließendem Kühlen der Pellets in einer Kühlvorrichtung wird die Abluft der Kühlvorrichtung einem Wärmetauscher zugeführt durch den Wasser aufgeheizt wird.

0131201

P 33 24 159.7-41
Ulrich Walter

Verfahren und Vorrichtung zum Pelletieren

Die Erfindung betrifft ein Verfahren und eine Vorrichtung zum Pelletieren und anschließenden Kühlen der Pellets mittels Luft unter Anfall von erwärmter Abluft, die entstaubt wird.

Aufgabe der Erfindung ist, die bei dem Verfahren sich ergebende Wärme der Abluft zu verwerten.

Gemäß der Erfindung wird diese Aufgabe dadurch gelöst, daß die entstaubte Abluft einem wasseraufheizenden Wärmeaustauscher zugeführt wird. Gemäß der Erfindung ist bei einer Vorrichtung mit einer Pelletierpresse und einer nachgeschalteten Kühlvorrichtung, die eine Lufteintrittsleitung und eine Abluftaustrittsleitung, in der hintereinander ein Sauggebläse und ein Staubabscheider liegen, hinter dem Staubabscheider ein an eine Wasserleitung angeschlossener Wärmeaustauscher angeordnet.

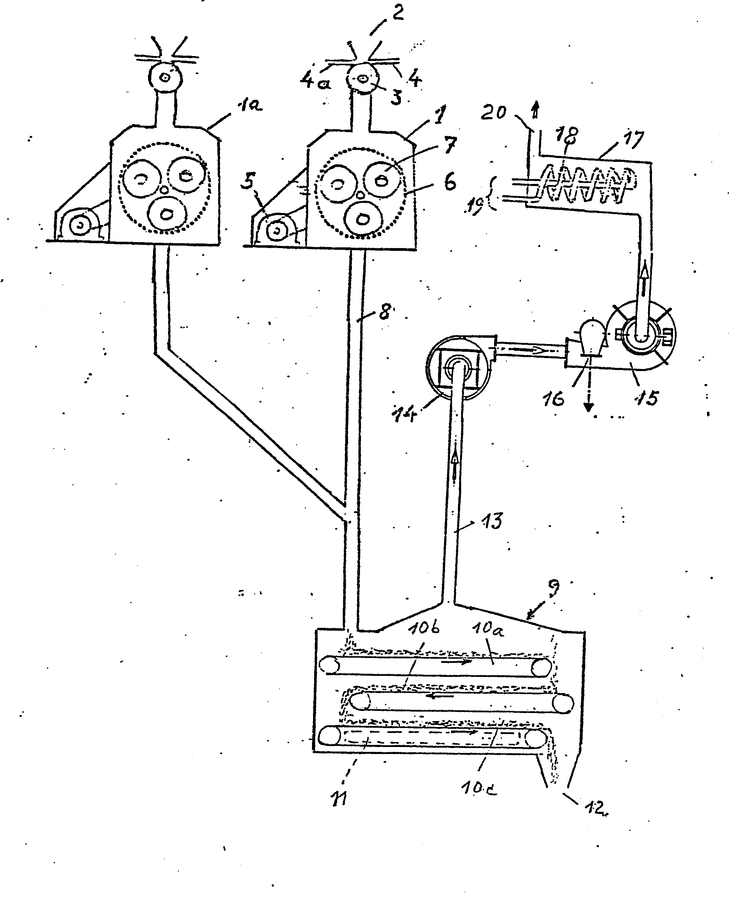

Die Zeichnung zeigt ein Ausführungsbeispiel der Erfindung.

Die dargestellte Pelletpresse 1 hat einen Einlaß 2 für zu pelletierendes Gut, einen angeschlossenen Mischerteil 3 mit Einlässen 4, 4a für Flüssigkeit bzw. Wasserdampf, eine von einem Motor 5 in Umlauf setzbare zylinder-

C/Gö 37 147

mantelförmige Matrize 6 mit einer Vielzahl radialer Öffnungen, durch die hindurch das eingefüllte Gut mittels Kollerwalzen 7 zwecks Herstellung der Pellets hindurchgedrückt wird, ein Rohr 8 zum Abfördern der hergestellten Pellet. Leitungen 4 und 4a münden in die Mischvorrichtung 3. Die Leitung 4 kann beispielsweise für die Zufuhr von Flüssigkeit verwendet werden, die Leitung 4a zur Zufuhr von Wasserdampf.

Die Leitung 8 mündet in eine Kühlvorrichtung 9, in der die zugeführten Pellets auf mehreren übereinander angeordneten endlosen Siebbändern 10a, 10b, 19c, deren Laufrichtung durch Pfeile angedeutet ist, hin- und her- und schließlich zu einem Auslaß 12 geführt werden. Von einem Gebläse 14 wird Luft durch einen in einer Seitenwand des Kühlers 9 vorgesehenen, zum untersten Siebband 10c parallelen und in den Zwischenraum zwischen den beiden Trums des Siebbandes 10c mündenden Schlitz 11 gesaugt, so daß diese Luft nacheinander durch alle auf den Siebbändern 10a, 10b, 10c liegenden Pelletschichten und ein zum Gebläse 14 führendes Rohr 13 gefördert wird. Vom Gebläse 14 wird die Luft dann einem Staubabscheider 15 zugeführt, der einen Staubaustritt 16 hat. Die vom Staub befreite warme Luft wird dann in einen Wärmetauscher 17 gefördert, in dem sie eine schraubenförmige Rohrschlange 18 umspült und dann aus einem Auslaß 20 abströmt. Die Rohrschlange liegt im Kreislauf einer Wasserleitung 18.

Die hohe Temperatur der Pellets ergibt sich insbesondere durch das Hindurchpressen des zu pelletisierenden Guts durch die Bohrungen der Matrize 6 und gegebenenfalls durch Wasserdampf, der durch die Leitung 4a zugeführt wird und eine Temperatur von beispielsweise 70 bis 80$^\circ$ hat. Die Abluft der Kühlvorrichtung 9 hat beispielsweise eine Temperatur von 60 bis 70$^\circ$, so daß sich das Wasser der Wasserleitung 19 auf eine solche Temperatur erwärmt, daß es für vielfache Zwecke brauchbar ist.

Die Kühlvorrichtung 9 kann mit einer einzigen Pelletpresse 1 oder auch mit mehreren Pelletpressen verbunden sein. Das Ausführungsbeispiel zeigt die Verbindung mit zwei Pelletpressen 1 und 1a.

0131201

−/−

P 33 24 159.7-41
Ulrich Walter

17. Mai 1984

Patentansprüche

1.    Verfahren zum Pelletieren von zu pelletierendem
Gut und zum anschließenden Kühlen der erhaltenen Pellets
mittels Luft unter Anfall von erwärmter Abluft, die entstaubt wird,
d a d u r c h  g e k e n n z e i c h n e t ,
daß man die entstaubte Abluft einem wasseraufheizenden
Wärmeaustauscher zuführt.

2.    Vorrichtung zur Durchführung des Verfahrens nach
Anspruch 1, mit einer Pelletierpresse und einer nachgeschalteten Kühlvorrichtung, die eine Lufteintrittsleitung und eine Abluftaustrittsleitung, in der hintereinander ein Sauggebläse und ein Staubabscheider liegen,
besitzt,
d a d u r c h  g e k e n n z e i c h n e t ,
daß hinter dem Staubabscheider (15) ein an eine Wasserleitung (19) angeschlossener Wärmeaustauscher (17) angeordnet ist.

C/Gö 37 147
17.5.84

**Europäisches Patentamt**

**EUROPÄISCHER RECHERCHENBERICHT**

## EINSCHLÄGIGE DOKUMENTE

EP 84107376.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | US - A - 4 233 254 (SATO)<br>* Spalte 3, Zeile 60 - Spalte 4, Zeile 10 * | 1,2 | B 01 J 2/00<br>F 28 D 7/00 |
| Y | DE - A1 - 3 039 742 (MOTORENWERKE)<br>* Seite 5, Zeilen 17-22 * | 1,2 | |
| A | DE - A1 - 3 140 687 (BEHNCKE)<br>* Seite 7, Zeilen 7-20; Seite 10, Zeilen 19-24 * | 1,2 | |
| A | DE - A1 - 2 853 054 (SANDVIK)<br>* Seite 12, Zeilen 4-8 * | 1 | |

RECHERCHIERTE SACHGEBIETE (Int. Cl.4)

B 01 J 2/00
F 28 D 7/00

Der vorliegende Recherchenbericht wurde für alle Patentansprüche erstellt.

| Recherchenort | Abschlußdatum der Recherche | Prüfer |
|---|---|---|
| WIEN | 19-09-1984 | GLAUNACH |